# EUROPÄISCHE PATENTSCHRIFT

(11) **EP 1 306 954 B1**
(45) Veröffentlichungstag und Bekanntmachung des Hinweises auf die Patenterteilung: **27.07.2011**
(21) Anmeldenummer: 01811053.6
(22) Anmeldetag: 29.10.2001
(51) Int. Cl.: H02G 5/06

(54) **GIS-Stützisolator mit integrierter Barriere**
Insulating spacer with integrated barrier for gas-insulated electrical installation
Isolateur de support avec barrière intégrée pour installation électrique à isolation gazeuse

(43) Veröffentlichungstag der Anmeldung: 02.05.2003
(73) Patentinhaber: ABB Research Ltd., 8050 Zürich (CH)
(72) Erfinder: Salge, Gerhard, 4332 Stein (CH); Piemontesi, Marco, 6710 Biasca (CH); Heitz, Christoph, 8353 Elgg/ZH (CH)
(74) Vertreter: ABB Patent Attorneys

(56) Entgegenhaltungen:
- US-A- 4 818 825
- PATENT ABSTRACTS OF JAPAN vol. 015, no. 510 (E-1149), 25. Dezember 1991 (1991-12-25) & JP 03 222621 A (TOSHIBA CORP), 1. Oktober 1991 (1991-10-01)

## Beschreibung

### TECHNISCHES GEBIET

Die vorliegende Erfindung bezieht sich auf das Gebiet der elektrischen Komponenten und Anlagen zur Stromübertragung und Stromverteilung und insbesondere auf das Gebiet der gasisolierten Schaltanlagen. Sie geht aus von einem Stützisolator für eine gasisolierte Schaltanlage, von einer gasisolierten Schaltanlage und einem Schaltanlagenmodul nach dem Oberbegriff der unabhängigen Ansprüche.

### STAND DER TECHNIK

Die Oberfläche eines Isolatorkörpers ist eine dielektrische Schwachstelle des Isolators. Elektrisch leitende Partikel wie z. B. Metallspähne, die beispielsweise durch Abrieb bei Trennerschaltungen oder durch Ablösungen vom Leiter aufgrund thermischer Zyklen und daraus resultierender Bewegung entstehen, haben die Tendenz, aufgrund der hohen Dielektrizitätskonstante des Isolators an dessen Oberfläche anzuhaften und sich dort zu akkumulieren. Solche Partikel führen zu einer deutlich niedrigeren Durchschlagsspannung, da das elektrische Feld um die Partikel durch die Nähe des Isolatorkörpers verstärkt wird.

In der WO 99/18582 wird eine gattungsgemässe gas- oder luftisolierte Schaltanlage offenbart. Zur Verbesserung der Durchschlagsfestigkeit ist ein Innenleiter mit einer dielektrischen Schicht und mit transversal hervorstehenden Barrieren versehen. Die Barrieren sind beidseits von und nahe beabstandet zu den Innenleiter tragenden Stützisolatoren angeordnet. Sie dienen dazu, Oberflächenentladungen, sogenannte "streamer", die auf der dielektrischen Isolationsschicht des Innenleiters auftreten, daran zu hindern, den Stützisolator zu erreichen und über diesen auf die geerdete Kapselung oder einen benachbarten Innenleiter überzuschlagen. Für diesen Zweck sind die Barrieren mit einer in transversaler Richtung verjüngten Geometrie, quasi in der Art eines Gebirges ohne überhängende Partien, ausgestaltet, um einerseits eine Wegverlängerung für die Oberflächenentladung und andererseits eine für den Tripelpunkt an der Kontaktstelle zwischen Innenleiter und Stützisolator vorteilhafte Feldsteuerung zu erzielen. Nachteilig ist, dass oftmals die Wegverlängerung nicht ausreicht, um eine Oberflächenentladung zum Abbruch zu bringen. Zudem können in dieser Anordnung Oberflächenentladungen, die auf dem Stützisolator entstehen oder bis dorthin gelangen, nicht aufgehalten werden. Insgesamt ist das Risiko dielektrischer Durchschläge aufgrund von Oberflächenentladungen im Bereich von Stützisolatoren immer noch sehr hoch.

In der WO 00/62309 wird ein dielektrischer Isolator zum Abstützen einer hochspannungsführenden Elektrode an einer Halterung offenbart, der von einem Schutzkörper, z. B. einem porösen Schaumstoff, mit niedriger Dielektrizitätskonstante ummantelt ist. Der Schutzkörper verhindert, dass sich Metallspähne direkt auf dem Isolator und insbesondere am Tripelpunkt ablagern.

Die Erfindung nimmt auf die JP 03 222621 Bezug, die einen GIS-Stützisolator gemäss Oberbegriff von Anspruch 1 offenbart. Der Isolator weist an der Oberfläche in einem Bereich zwischen der Komponente und der Halterung eine becherförmige, zur Halterung hin konkav geöffnete Einbuchtung auf. Durch Wahl der Breite der Einbuchtung soll die elektrische Feldstärke an der Isolatoroberfläche reduziert werden.

Die US 4,818,825 zeigt einen GIS-Stützisolator, der an seiner Oberfläche eine Mehrzahl dielektrischer Rippen aufweist. Zur Vergleichmässigung der dielektrischen Feldstärke und damit der Kriechstrom-Durchschlagswahrscheinlichkeit an der Isolatoroberfläche sind die Rippen in Bereichen hoher Feldstärke näher zueinander beabstandet als in feldschwachen Regionen. Die dielektrischen Rippen erstrecken sich radial geradlining nach aussen und sind durch ihre Höhe, Breite und einen variablen Abstand zueinander charakterisiert.

### DARSTELLUNG DER ERFINDUNG

Aufgabe der vorliegenden Erfindung ist es, einen Stützisolator für eine gasisolierte Schaltanlage, eine gasisolierte Schaltanlage und ein Schaltanlagenmodul mit einem Stützisolator anzugeben, die eine verbesserte Durchschlagsfestigkeit aufweisen. Diese Aufgabe wird erfindungsgemäss durch die Merkmale der unabhängigen Ansprüche gelöst.

In einem ersten Aspekt besteht die Erfindung in einem Stützisolator mit einem Grundkörper zum Abstützen einer hochspannungsführenden Komponente an einer Halterung, wobei der Stützisolator zur Überbrückung einer Hochspannungs-Potentialdifferenz zwischen der Komponente und der Halterung ausgelegt ist und eine im wesentlichen entlang einer Überbrückungsrichtung, d. h. im wesentlichen entlang eines Potentialgradienten im ungestörten Betriebszustand, erstreckte Oberfläche des Grundkörpers aufweist, wobei die Oberfläche des Stützisolators in einem Bereich zwischen der Komponente und der Halterung eine becherförmige, zur Komponente oder zur Halterung hin konkav geöffnete Einbuchtung aufweist. Die konkave Becherform dient zur Umlenkung von Oberflächenentladungen, die von der Komponente ausgehen und sich entlang der Überbrückungsrichtung ausbreiten, in eine Gegenrichtung zur Überbrückungsrichtung. Durch die der ursprünglichen Ausbreitungsrichtung entgegengesetzte Wegstrecke werden Entladungen zu einem Stillstand gebracht und gegebenenfalls seitlich auf der Isolatoroberfläche abgelenkt. Insgesamt werden durch die Erfindung Oberflächenentladungen entlang partikelbehafteter, einem Potentialgefälle unterworfener Isolatoroberflächen wirksam unterbunden. Folglich können Anlagen, z. B. gasisolierte Schaltanlagen (GIS), für höhere E-Feldstärken, stärkere Partikelverschmutzung und/oder kompaktere Abmessungen ausgelegt werden.

In einem Ausführungsbeispiel weist die Einbuchtung für Oberflächenentladungspfade zwischen der Komponente und der Halterung eine makroskopische, rückläufige Wegstrecke zur Selbstblockierung von Oberflächenentladungen auf. Dies bedeutet, dass die Rückführung und gegebenenfalls Ablenkung von Oberflächenentladungen über makroskopische Abmessungen, z. B. im Bereich von mm oder cm, erfolgt. Dabei werden die Oberflächenentladungen so gelenkt, dass auf der rückläufigen Wegstrecke entweder ihr Abstand zur Halterung zu- und zur Komponente abnimmt, wenn die Einbuchtung zur Komponente hin konkav geöffnet ist, oder ihr Abstand zur Halterung ab- und zur Komponente zunimmt, wenn die Einbuchtung zur Halterung hin konkav geöffnet ist.

In einem weiteren Ausführungsbeispiel sind die Oberflächenentladungspfade von der Komponente zur Halterung durch die Einbuchtung von der Überbrückungsrichtung um einen Winkel umlenkbar, der mehr als 90°, bevorzugt 120°, besonders bevorzugt 150°, insbesondere 180°, beträgt und im wesentlichen in einer Ebene liegt, die durch eine Flächennormale der Oberfläche des Grundkörpers und durch die Überbrückungsrichtung aufgespannt ist. Je näher der Umlenkungswinkel bei 180° liegt, um so effizienter können Oberflächenentladungen durch Selbstblockierung gestoppt oder abgelenkt und damit Überschläge auf die Halterung vermieden werden.

Durch die Ausführungsbeispiele gemäss Anspruch 3 können möglichst viele und vorzugsweise alle Oberflächenentladungspfade zwischen der Komponente und der Halterung durch mindestens eine Einbuchtung mit rückläufigen Selbstblokkierungs-Wegstrecken versehen werden.

Das Ausführungsbeispiel gemäss Anspruch 4 hat den Vorteil, dass die Einbuchtung auf besonders einfache Weise zwischen dem Grundkörper und der Ausbuchtung der dielektrischen Barriere gebildet ist. Insbesondere kann die Barriere an dem Grundkörper eines herkömmlichen Stützisolators befestigt sein.

Das Ausführungsbeispiel gemäss Anspruch 5 hat den Vorteil, dass die Barriere eine einfache Form aufweist und durch die Barriere nur geringe E-Feldverzerrungen an der Oberfläche des Stützisolators verursacht werden.

Das Ausführungsbeispiel gemäss Anspruch 6 hat den Vorteil, dass der Stützisolator mit Barriere und Einbuchtung auf besonders einfache Weise durch Kleben oder Giessen herstellbar ist.

Das Ausführungsbeispiel gemäss Anspruch 7 hat den Vorteil, dass durch die Abrundung der Barriere und der Einbuchtung und durch deren Anordnung in einer feldschwachen und vorzugsweise der feldschwächsten Region der Isolatoroberfläche die E-Feldbelastungen gesenkt und/oder die physikalischen Dimensionen der Anlage weiter reduziert werden können.

In einem zweiten Aspekt hat die Erfindung eine gasisolierte Schaltanlage oder ein Schaltanlagenmodul zum Gegenstand, die oder das einen Stützisolator gemäss dem ersten Aspekt und den zugehörigen Ausführungsbeispielen umfasst.

Weitere Ausführungen, Vorteile und Anwendungen der Erfindung ergeben sich aus abhängigen Ansprüchen sowie aus der nun folgenden Beschreibung und den Figuren.

### KURZE BESCHREIBUNG DER ZEICHNUNG

Es zeigen für einen erfindungsgemässen Stützisolator und eine erfindungsgemässe gasisolierte Schaltanlage:
- Fig. 1: im Querschnitt einen erfindungsgemässen Stützisolator mit einer integrierten dielektrischen T-förmigen Barriere;
- Fig. 2: im Querschnitt einen erfindungsgemässen Stützisolator mit einer integrierten dielektrischen L-förmigen Barriere; und
- Fig. 3: einen experimentellen Nachweis (schematisiert) für die Abblockung von Oberflächenentladungen durch die Barriere.

In den Figuren sind gleiche Teile mit gleichen Bezugszeichen versehen.

### WEGE ZUR AUSFÜHRUNG DER ERFINDUNG

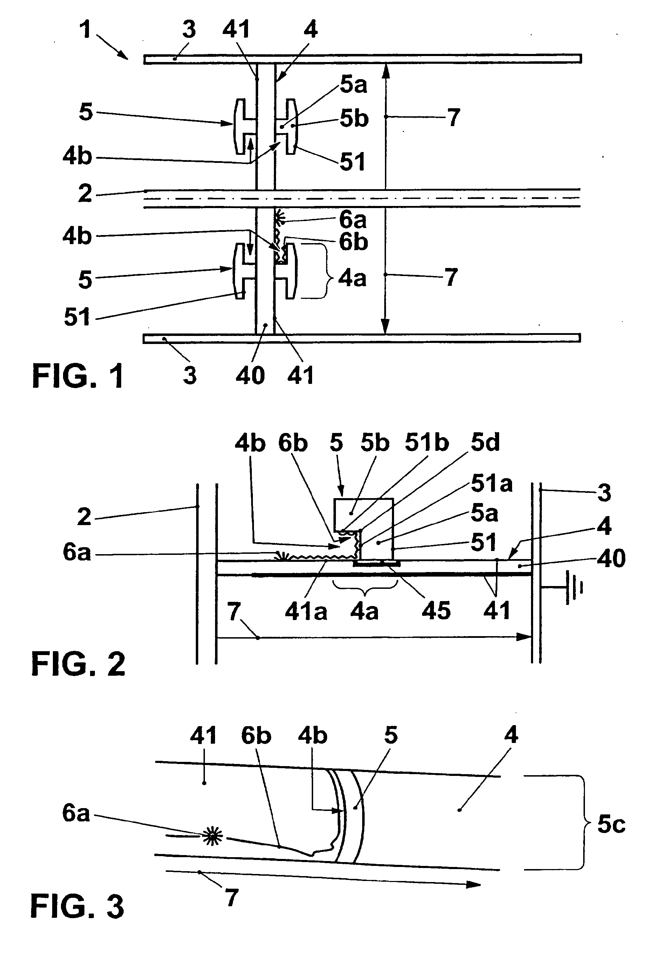

Fig. 1 zeigt eine gasisolierte Schaltanlage 1 (GIS) mit einem Stützisolator 4, der einen Grundkörper 40 zum Abstützen eines Innenleiters 2 oder allgemein einer hochspannungsführenden Komponente 2 an einer GIS-Kapselung 3 oder Erde 3 oder allgemein Halterung 3 aufweist. Der Stützisolator 4 ist bezüglich seiner geometrischen Form, insbesondere seiner Oberflächengestaltung, und seines Materials dielektrisch so dimensioniert, dass er zur Überbrückung einer Hochspannungs- oder gegebenenfalls Mittelspannungs-Potentialdifferenz zwischen der Komponente 2 und der Halterung 3 geeignet ist. Eine Oberfläche 41 des Grundkörpers 40 erstreckt sich im wesentlichen entlang einer Überbrückungsrichtung 7, d. h. im wesentlichen entlang eines Potentialgradienten, der im Betriebszustand am Stützisolator 4 anliegt.

Erfindungsgemäss weist die Oberfläche 41, 51 des Stützisolators 4 in einem Bereich 4a zwischen der Komponente 2 und der Halterung 3 eine becherförmige, zur Komponente 2 oder zur Halterung 3 hin konkav geöffnete Einbuchtung 4b auf. Die konkave Form der Einbuchtung 4b dient dazu, für Oberflächenentladungspfade 6b von der Komponente 2 zur Halterung 3 oder umgekehrt eine Richtungsänderung zu ermöglichen, so dass die Entladung 6a mindestens teilweise entgegen ihrer ursprünglichen Ausbreitungsrichtung zurückgeführt wird. Dies soll zumindest für dielektrisch kritische Pfade 6b gelten. Der rückläufige Pfad 6b bewirkt eine Selbstblockierung der Entladung 6a und verhindert deren Überschlag von der Komponente 2 auf die Halterung 3 oder umgekehrt von der Halterung 3 auf die Komponente 2. Im folgenden werden Ausführungsbeispiele angegeben.

Durch die neue Geometrie des Stützisolators 4 wird eine durch anhaftende, metallische Partikel geschwächte Isolatoroberfläche 41, 51 dielektrisch wesentlich verbessert. Die Einbuchtung 4b verhindert ein ungehemmtes Vorwachsen einer Entladung 6a, die z. B. durch eine Überspannung gezündet wurde, und den damit verbundenen Überschlag. Demzufolge muss der Isolator 4 nicht mehr allen auftretenden dielektrischen Beanspruchungen standhalten. Nur selten auftretende Überspannungen sind derzeit insbesondere bei Anwesenheit von Teilchen kritisch. Aufgrund der Einbuchtung 4b sind Oberflächenentladungen 6a während kurzzeitiger Überspannungen tolerierbar, da sie zu keinem Durchschlag mehr führen. Dieser Vorteil kann alleine durch eine Barriere ohne Einbuchtung nicht erreicht werden. Solche Überspannungen müssen daher bei der dielektrischen Dimensionierung nicht mehr berücksichtigt werden und die gesamte Anlage 1 kann kleiner und billiger gebaut werden.

In Fig. 1 ist die Einbuchtung 4b dadurch realisiert, dass auf dem Grundkörper 40 eines herkömmlichen Stützisolators 4 eine dielektrische Barriere 5 befestigt ist, die eine Ausbuchtung 5a, 5b gegenüber dem Grundkörper 40 des Stützisolators 4 und eine Erstreckung 5c quer zur Überbrükkungsrichtung 7 aufweist. Die Einbuchtung 4b ist dann zwischen dem Grundkörper 40 und der Barriere 5 des Stützisolators 4 gebildet. Mit Vorteil ist jeweils mindestens eine Einbuchtung 4b auf einer vorderseitigen und einer rückseitigen Oberfläche 41, 51 des Stützisolators 4 angeordnet und/oder sind mindestens eine zur Komponente 2 hin konkav geöffnete Einbuchtung 4b und mindestens eine zur Halterung 3 hin konkav geöffnete Einbuchtung 4b vorhanden und/oder ist die Einbuchtung 4b und insbesondere die Barriere 5 ringförmig um die Komponente 2 geschlossen. Dadurch sind für eine Mehrzahl oder für alle Oberflächenentladungspfade 6b eine rückläufige Wegstrecke zur Selbstblockierung der Entladung 6a vorhanden.

Die beispielhaft gezeigte Barriere 5 besitzt ein im Querschnitt im wesentlichen T-förmiges Profil (Fig. 1) oder L-förmiges Profil (Fig. 2) 5a, 5b mit einem vom Stützisolator 4 abstehenden Halsteil 5a und einem im wesentlichen parallel zur Oberfläche 41 des Grundkörpers 40 erstreckten Kopfteil 5b. Beim T-Profil 5a, 5b sind die zusätzlichen Einbuchtungen, die zur Halterung 3 hin konkav geöffnet sind, auf einfache Weise realisiert. Das ist besonders dann von Nutzen, wenn die Rollen der Komponenten 2 und der Halterung 3 austauschbar sind, z. B. wenn die Überschlagsgefahr von der Komponente 2 zur Halterung 3 und von der Halterung 3 zur Komponente 2 ähnlich gross sind, oder wenn die Komponente 2 zugleich als Halterung 3 und die Halterung 3 zugleich als Komponente 2 ausgelegt ist. Dies ist z. B. der Fall, wenn der Stützisolator 4 zwischen zwei Innenleitern einer 3-Phasen gasisolierten Schaltanlage angeordnet ist und Überschläge durch Oberflächenentladungen in beiden Richtungen vermieden werden sollen.

Typischerweise hat die Ausbuchtung 5a, 5b eine in einer zur Oberfläche 41 des Grundkörpers 40 senkrechten Richtung zunehmende Dicke, um die konkave Öffnung 4b zu realisieren. Die Dimensionierung der Barriere 5, insbesondere eine Höhe und Dicke des Halsteils 5a, eine Höhe und Dicke des Kopfteils 5b, insbesondere ein konkaver Überstand des Kopfteils 5b gegenüber dem Halsteil 5a, und eine transversale Erstreckung 5c, erfolgt nach Massgabe der dielektrischen Anforderungen der jeweiligen Spannungsebene, insbesondere in Abhängigkeit einer zulässigen E-Feldstärke und eines zulässigen Verschmutzungszustands der Isolatoroberfläche 41, 51.

Fig. 2 zeigt eine Detailansicht, in welcher die Einbuchtung 4b durch eine Oberfläche 41a des Grundkörpers 40 im Bereich 4a und durch eine dem Grundkörper 40 benachbarte Oberfläche 51a, 51b der Barriere 5 begrenzt ist und die benachbarte Oberfläche 51a, 51b der Barriere 5 ein Oberflächenelement 51b parallel zur Oberfläche 41a des Grundkörpers 40, aber beabstandet zu diesem aufweist, so dass die Oberfläche 41a des Grundkörpers 40 und die benachbarte Oberfläche 51a, 51b eine konkave, im Querschnitt J- oder U-förmige Einbuchtung 4b bilden.

Die Barriere 5 kann mit dem Grundkörper 40 des Stützisolators 4 verklebt sein, wobei die Klebfläche 45 eine mit dem Material des Stützisolators 4 vergleichbare dielektrische Durchschlagsfestigkeit und möglichst auch Dielektrizitätskonstante aufweisen soll. Alternativ kann die Barriere 5 einstückig mit dem Grundkörper 40 des Stützisolators 4 ausgebildet, z. B. einstückig gegossen, sein. Als Material können bekannte Feststoffisolatormaterialien, z. B. Polyäthylen, gewählt werden.

Vorzugsweise ist der Bereich 4a zur Anordnung der Einbuchtung 4b oder einer Barriere 5 zwischen der Komponente 2 und der Halterung 3 in einem Gebiet mit im Normalbetriebszustand geringen E-Feldstärken an der Oberfläche 41, 51 des Stützisolators 4 gewählt. In der Regel ist der Stützisolator 4 radial nach aussen verjüngt und weist feldschwächere oder feldschwächste Oberflächenbereiche im Verjüngungsgebiet auf. Zur verbesserten Feldsteuerung kann die Einbuchtung 4b, insbesondere ein Innenprofil 5c der Einbuchtung 4b, gerundete Konturen aufweisen.

Der Stützisolator 4 ist z. B. ein Schottisolator 4 oder ein gasdurchlässiger Stützisolator 4. Der Stützisolator 4 kann für eine gasisolierte Schaltanlage 1, insbesondere für Hochspannungsniveaus ab 123 kV, ausgelegt sein.

Fig. 3 zeigt eine schematisierte Photographie zum experimentellen Nachweis, dass eine Oberflächenentladung 6a durch die Barriere 5 oder Einbuchtung 4b abgeblockt werden kann. An eine Nadelelektrode wurde eine stufenförmige Hochspannung aufgeschaltet. Dadurch wird auf der Oberfläche 41 eine Entladung 6a gestartet. Die Oberflächenentladung 6a breitet sich zunächst auf dem Stützisolator 4 in Überbrückungsrichtung 7 aus und wird an der Barriere 5 durch deren konkaves Einbuchtungsprofil 4b abgeblockt und im vorliegenden Fall in seitlicher Richtung, d. h. entlang der transversalen Erstreckung 5c der Barriere 5 oder Einbuchtung 4b, abgelenkt. Der Entladungspfad 6b enthält keine Entladungsstrecke durch Gas, sondern verläuft auf Oberflächen 41, 51, 51a, 51b der Anlage 1 und insbesondere auf Isolatoroberflächen 41, 51, 51a, 51b, die einem starken Potentialgefälle, typischerweise zwischen Hochspannung und Erde oder zwischen unterschiedlichen hochspannungsführenden Phasen, unterworfen sind.

Gegenstand der Erfindung sind auch eine gasisolierte Schaltanlage 1 umfassend einen oben beschriebenen Stützisolator 4 und ein Modul (nicht dargestellt) einer gasisolierten Schaltanlage 1 umfassend einen derartigen Stützisolator 4. Das Modul kann eine vorgefertigte, separat transportierbare Baugruppe sein, die zusammen mit anderen Modulen zu einer gasisolierten Schaltanlage 1 zusammensetzbar ist.

### BEZUGSZEICHENLISTE

- 1: Gasisolierte Schaltanlage (GIS)
- 2: Innenleiter
- 3: Kapselung, Erde
- 4: Stützisolator, Schottisolator
- 4a: Bereich, Barrierenbereich
- 4b: becherförmige Einbuchtung
- 40: Grundkörper des Stützisolators (ohne Barriere)
- 41: Oberfläche des Stützisolators (ohne Barriere)
- 41a, 51a, 51b: Oberfläche der Einbuchtung
- 45: Grenzfläche, Klebung
- 5: Barriereelement
- 51, 51a, 51b: Oberfläche des Barriereelements
- 5a, 5b: Ausbuchtung
- 5a: Hals
- 5b: Kopf
- 5c: Erstreckung quer zur Überbrückungsrichtung
- 5d: Innenprofil (gerundet)
- 6a: Hochspannungsnadel
- 6b: Entladungspfad, Oberflächenentladung
- 7: Überbrückungsrichtung

## Patentansprüche

1. Stützisolator (4) mit einem Grundkörper (40) zum Abstützen einer hochspannungsführenden Komponente (2) an einer Halterung (3), wobei der Stützisolator (4) zur Überbrückung einer Hochspannungs-Potentialdifferenz zwischen der Komponente (2) und der Halterung (3) ausgelegt ist und eine im wesentlichen entlang einer Überbrückungsrichtung (7) erstreckte Oberfläche (41) des Grundkörpers (40) aufweist, wobei die Oberfläche (41, 51) des Stützisolators (4) in einem Bereich (4a) zwischen der Komponente (2) und der Halterung (3) eine becherförmige, zur Halterung (3) hin konkav geöffnete Einbuchtung (4b) aufweist, **dadurch gekennzeichnet, dass** mindestens eine zur Komponente (2) hin konkav geöffnete Einbuchtung (4b) und mindestens eine zur Halterung (3) hin konkav geöffnete Einbuchtung (4b) vorhanden sind.

2. Stützisolator (4) nach Anspruch 1, **dadurch gekennzeichnet, dass**
a) die Einbuchtung (4b) für Oberflächenentladungspfade (6b) zwischen der Komponente (2) und der Halterung (3) eine makroskopische, rückläufige Wegstrecke (51b) zur Selbstblockierung von Oberflächenentladungen (6a) aufweist und/oder
b) Oberflächenentladungspfade (6b) zwischen der Komponente (2) und der Halterung (3) durch die Einbuchtung (4b) von der Überbrückungsrichtung (7) um einen Winkel umlenkbar sind, der mehr als 90°, bevorzugt 120°, besonders bevorzugt 150°, insbesondere 180°, beträgt und im wesentlichen in einer Ebene liegt, die durch eine Flächennormale der Oberfläche (41) des Grundkörpers (40) und durch die Überbrückungsrichtung (7) aufgespannt ist.

3. Stützisolator (4) nach einem der vorangehenden Ansprüche, **dadurch gekennzeichnet, dass**
a) jeweils mindestens eine Einbuchtung (4b) auf einer vorderseitigen und einer rückseitigen Oberfläche (41, 51) des Stützisolators (4) angeordnet ist und/oder
b) die Einbuchtung (4b) ringförmig um die Komponente (2) geschlossen ist.

4. Stützisolator (4) nach einem der vorangehenden Ansprüche, **dadurch gekennzeichnet, dass**
a) der Stützisolator (4) an seiner Oberfläche (41) in dem Bereich (4a) eine dielektrische Barriere (5) umfasst, die eine Ausbuchtung (5a, 5b) gegenüber dem Grundkörper (40) des Stützisolators (4) und eine Erstreckung (5c) quer zur Überbrückungsrichtung (7) aufweist, und
b) die Einbuchtung (4b) zwischen dem Grundkörper (40) und der Barriere (5) des Stützisolators (4) gebildet ist.

5. Stützisolator (4) nach Anspruch 4, **dadurch gekennzeichnet, dass**
a) die Barriere (5) ein im Querschnitt im wesentlichen L-förmiges oder T-förmiges Profil (5a, 5b) mit einem vom Stützisolator (4) abstehenden Halsteil (5a) und einem im wesentlichen parallel zur Oberfläche (41) des Grundkörpers (40) erstreckten Kopfteil (5b) aufweist und/oder
b) die Barriere (5) ringförmig um die Komponente (2) geschlossen ist.

6. Stützisolator nach einem der Ansprüche 4-5, **dadurch gekennzeichnet, dass**
a) die Barriere (5) mit dem Grundkörper (40) des Stützisolators (4) verklebt ist und die Klebfläche (45) eine mit dem Material des Stützisolators (4) vergleichbare dielektrische Durchschlagsfestigkeit aufweist und/oder
b) die Barriere (5) einstückig mit dem Grundkörper (40) des Stützisolators (4) ausgebildet ist.

7. Stützisolator (4) nach einem der vorangehenden Ansprüche, **dadurch gekennzeichnet, dass**
a) der Bereich (4a) zur Anordnung der Einbuchtung (4b) und insbesondere einer Barriere (5) zwischen der Komponente (2) und der Halterung (3) in einem Gebiet mit im Normalbetriebszustand geringen E-Feldstärken an der Oberfläche (41, 51) des Stützisolators (4) gewählt ist und/oder
b) die Einbuchtung (4b), insbesondere ein Innenprofil (5c) der Einbuchtung (4b), gerundete Konturen zur verbesserten E-Feldsteuerung aufweist.

8. Stützisolator (4) nach einem der vorangehenden Ansprüche, **dadurch gekennzeichnet, dass**
a) die hochspannungsführende Komponente (2) ein Innenleiter (2) in einer gasisolierten Schaltanlage (1) ist und/oder
b) die Halterung (3) eine Kapselung (3) oder ein weiterer Innenleiter einer gasisolierten Schaltanlage (1) ist und/oder
c) die Komponente (2) zugleich als Halterung (3) und die Halterung (3) zugleich als Komponente (2) ausgelegt ist.

9. Stützisolator nach einem der vorangehenden Ansprüche, **dadurch gekennzeichnet, dass**
a) der Stützisolator (4) ein Schottisolator (4) oder ein gasdurchlässiger Stützisolator ist und/oder
b) der Stützisolator (4) für eine gasisolierte Schaltanlage (1), insbesondere für Hochspannungsniveaus ab 123 kV, ausgelegt ist.

10. Gasisolierte Schaltanlage (1) umfassend einen Stützisolator (4) gemäss einem der vorangehenden Ansprüche.

11. Modul für eine gasisolierte Schaltanlage (1) umfassend einen Stützisolator (4) gemäss einem der Ansprüche 1-9.

## Claims

1. Post insulator (4) having a base body (40) for supporting a high-voltage component (2) on a holder (3), with the post insulator (4) being designed to bridge a high-voltage potential difference between the component (2) and the holder (3) and having a surface (41), which extends essentially along a bridging direction (7), of the base body (40), wherein the surface (41, 51) of the post insulator (4) has a cup-shaped indentation (4b), which is concave and open toward the holder (3), in an area (4a) between the component (2) and the holder (3), **characterized in that** at least one indentation (4b), which is concave and open toward the component (2), and at least one indentation (4b), which is concave and open toward the holder (3), are provided.

2. Post insulator (4) according to Claim 1, **characterized in that**
a) the indentation (4b) has a macroscopic rearward section (51b) for self-blocking of surface discharges (6a), for surface discharge paths (6b) between the component (2) and the holder (3), and/or
b) surface discharge paths (6b) between the component (2) and the holder (3) can be diverted by means of the indentation (4b) from the bridging direction (7) through an angle which is more than 90°, preferably 120° and particularly preferably 150° or especially 180°, and which lies essentially in a plane which is defined by a normal to the surface (41) of the base body (40) and by the bridging direction (7).

3. Post insulator (4) according to one of the preceding claims, **characterized in that**
a) in each case at least one indentation (4b) is arranged on a front surface (41) and on a rear surface (51) of the post insulator (4), and/or
b) the indentation (4b) is closed in an annular shape around the component (2).

4. Post insulator (4) according to one of the preceding claims, **characterized in that**
a) on its surface (41) in the area (4a), the post insulator (4) has a dielectric barrier (5) which has a projection (5a, 5b) with respect to the base body (40) of the post insulator (4), and has an extent (5c) transversely with respect to the bridging direction (7), and
b) the indentation (4b) is formed between the base body (40) and the barrier (5) of the post insulator (4).

5. Post insulator (4) according to Claim 4, **characterized in that**
a) the barrier (5) has a profile (5a, 5b) with an essentially L-shaped or T-shaped cross section, with a neck part (5a) which projects from the post insulator (4), and with a head part (5b) which extends essentially parallel to the surface (41) of the base body (40), and/or
b) the barrier (5) is closed in an annular shape around the component (2).

6. Post insulator according to one of Claims 4-5, **characterized in that**
a) the barrier (5) is adhesively bonded to the base body (40) of the post insulator (4), and the adhesion surface (45) has a dielectric breakdown strength which is comparable to that of the material of the post insulator (4), and/or
b) the barrier (5) is integral with the base body (40) of the post insulator (4).

7. Post insulator (4) according to one of the preceding claims, **characterized in that**
a) the area (4a) for arrangement of the indentation (4b) and in particular of a barrier (5) between the component (2) and the holder (3) is chosen to be in an area where there are low E-field strengths on the surface (41, 51) of the post insulator (4) during normal operation, and/or
b) the indentation (4b), in particular an inner profile (5c) of the indentation (4b), has rounded contours in order to improve the E-field control.

8. Post insulator (4) according to one of the preceding claims, **characterized in that**
a) the high-voltage component (2) is an inner conductor (2) in a gas-insulated switchgear assembly (1), and/or
b) the holder (3) is encapsulation (3) or a further inner conductor in a gas-insulated switchgear assembly (1), and/or
c) the component (2) is at the same time designed as the holder (3), and the holder (3) is at the same time designed as the component (2).

9. Post insulator according to one of the preceding claims, **characterized in that**
a) the post insulator (4) is a partition insulator (4) or a gas-permeable post insulator, and/or
b) the post insulator (4) is designed for a gas-insulated switchgear assembly (1), in particular for high-voltage levels above 123 kV.

10. Gas-insulated switchgear assembly (1) having a post insulator (4) according to one of the preceding claims.

11. Module for a gas-insulated switchgear assembly (1) having a post insulator (4) according to one of Claims 1-9.

## Revendications

1. Isolateur de support (4) avec un corps de base (40) destiné à supporter un composant transportant une haute tension (2) sur un support (3), dans lequel l'isolateur de support (4) est conçu de façon à maintenir une différence de potentiel de haute tension entre le composant (2) et le support (3) et présente une surface (41) du corps de base (40) s'étendant essentiellement le long d'une direction de maintien (7), dans lequel la surface (41, 51) de l'isolateur de support (4) présente, dans une région (4a) située entre le composant (2) et le support (3), un creux concave (4b) en forme de godet ouvert en direction du support (3), **caractérisé en ce qu'**il se trouve au moins un creux concave (4b) ouvert en direction du composant (2) et au moins un creux concave (4b) ouvert en direction du support (3).

2. Isolateur de support (4) selon la revendication 1, **caractérisé en ce que**
a) le creux (4b) présente, pour des chemins de décharge de surface (6b) entre le composant (2) et le support (3), un cheminement arrière macroscopique (51b) pour l'autoblocage de décharges de surface (6a), et/ou
b) des chemins de décharge de surface (6b) entre le composant (2) et le support (3) peuvent être déviés par le creux (4b), par rapport à la direction de maintien (7), d'un angle qui vaut plus de 90°, de préférence 120°, de préférence encore 150°, et en particulier 180°, et qui se situe essentiellement dans un plan qui est défini par une normale à la surface de la surface (41) du corps de base (40) et par la direction de maintien (7).

3. Isolateur de support (4) selon l'une quelconque des revendications précédentes, **caractérisé en ce que**
a) au moins un creux (4b) est disposé respectivement sur une surface avant et une surface arrière (41, 51) de l'isolateur de support (4), et
b) le creux (4b) est fermé en anneau autour du composant (2).

4. Isolateur de support (4) selon l'une quelconque des revendications précédentes, **caractérisé en ce que**
a) l'isolateur de support (4) comprend à sa surface (41), dans la région (4a), une barrière diélectrique (5), qui présente un renflement (5a, 5b) par rapport au corps de base (40) de l'isolateur de support (4) et une extension (5c) transversalement à la direction de maintien (7), et
b) le creux (4b) est formé entre le corps de base (40) et la barrière (5) de l'isolateur de support (4).

5. Isolateur de support (4) selon la revendication 4, **caractérisé en ce que**
a) la barrière (5) présente un profil de section transversale essentiellement en forme de L ou en forme de T (5a, 5b) avec une partie de col (5a) en saillie sur l'isolateur de support (4) et une partie de tête (5b) s'étendant essentiellement parallèlement à la surface (41) du corps de base (40), et/ou
b) la barrière (5) est fermée en anneau autour du composant (2).

6. Isolateur de support (4) selon l'une quelconque des revendications 4 ou 5, **caractérisé en ce que**
a) la barrière (5) est collée au corps de base (40) de l'isolateur de support (4) et la face de collage (45) présente une rigidité diélectrique comparable au matériau de l'isolateur de support (4), et/ou
b) la barrière (5) est réalisée d'une seule pièce avec le corps de base (40) de l'isolateur de support (4).

7. Isolateur de support (4) selon l'une quelconque des revendications précédentes, **caractérisé en ce que**
a) la région (4a) destinée à l'agencement du creux (4b) et en particulier d'une barrière (5) entre le composant (2) et le support (3) est choisie dans une zone présentant en situation de fonctionnement normal de faibles intensités de champ électrique à la surface (41, 51) de l'isolateur de support (4), et/ou
b) le creux (4b), en particulier un profil interne (5c) du creux (4b), présente des contours arrondis pour améliorer le guidage du champ électrique.

8. Isolateur de support (4) selon l'une quelconque des revendications précédentes, **caractérisé en ce que**
a) le composant transportant une haute tension (2) est un conducteur interne (2) dans une installation électrique à isolation gazeuse (1), et/ou
b) le support (3) est un blindage (3) ou un autre conducteur interne d'une installation électrique à isolation gazeuse (1), et/ou
c) le composant (2) est conçu en même temps comme support (3) et le support (3) est conçu en même temps comme composant (2).

9. Isolateur de support (4) selon l'une quelconque des revendications précédentes, **caractérisé en ce que**
a) l'isolateur de support (4) est un isolateur de cloison (4) ou un isolateur de support perméable au gaz, et/ou
b) l'isolateur de support (4) est conçu pour une installation électrique à isolation gazeuse (1), en particulier pour des niveaux de haute tension à partir de 123 kV.

10. Installation électrique à isolation gazeuse (1) comprenant un isolateur de support (4) selon l'une quelconque des revendications précédentes.

11. Module pour une installation électrique à isolation gazeuse (1) comprenant un isolateur de support (4) selon l'une quelconque des revendications 1 à 9.
